# EUROPEAN PATENT APPLICATION

(11) **EP 4 509 214 A1**
(43) Date of publication of application: **19.02.2025**
(21) Application number: 24152847.0
(22) Date of filing: 19.01.2024
(51) Int. Cl.: B01L 3/00

(54) **CARTRIDGE AND QUANTIFICATION METHOD THEREOF**

(30) Priority: 16.08.2023 US 202318234388
(71) Applicant: Credo Diagnostics Biomedical Pte. Ltd., Singapore 248373 (SG)
(72) Inventor: Ou, Yu-Cheng, 221 New Taipei City (TW); Chen, Han-Yi, 221 New Taipei City (TW); Tsai, Bing-Hsien, 221 New Taipei City (TW); Chen, Kuan-Ying, 221 New Taipei City (TW); Tseng, Chia-Chou, 221 New Taipei City (TW)
(74) Representative: Straus, Alexander

(57) **Abstract**

A cartridge and a quantification method include a main cover, a container, a first pipette, and a rotary valve. The main cover has a first surface and a second surface opposite with each other, the first surface includes a first quantification chamber, a first fluid tunnel, a first gas tunnel and a storage chamber, wherein a first end of the first quantification chamber is connected to the first fluid tunnel, a first end of the storage chamber is connected to the first gas tunnel, and a second end of the first quantification chamber is connected to a second end of the storage chamber. The first pipette is disposed on the main cover and partially protruded from the second surface, wherein the first pipette is connected to the second end of the first quantification chamber and vertically extended into the container. The rotary valve is rotatably disposed on the second surface.

## Description

### Field of the Invention

The present disclosure generally relates to a cartridge and a quantification method thereof, and more particularly, to a cartridge for nucleic acid extraction and nucleic acid amplification, and a quantification method of the cartridge.

### Background of the Invention

Nucleic acid extraction and nucleic acid amplification are common technologies used in biomedical testing or diagnosis. Generally, a nucleic acid extraction kit or a nucleic acid extraction reagent are usually used in open and routine laboratories for nucleic acid extraction, followed by using a nucleic acid amplification kit or a nucleic acid amplification reagent to amplify specific nucleic acid fragments or detect specific nucleic acid fragments. However, the aforementioned kits or reagents are usually required manual operation, which is time-consuming and easy to result in contamination on samples or reagents, thereby being less efficiency in use on mass testing or production line mode testing. On the other hand, although some existing analysis-cartridges capable of mechanical operation, those cartridges usually have a complicated configuration, and is required to be matched with an expensive machine for operation, thereby increasing the screening cost. Therefore, it is still necessary to the related arts to provide a novel and improved technique, to meet the practical requirements of the related arts.

### Summary of the Invention

This in mind, the present disclosure aims at providing a cartridge, in which at least one quantification chamber is disposed inside, to achieve active quantitation during transferring the liquid, to increase the sensitivity and the accuracy of screening by the cartridge thereby.

In addition, the preset disclosure also aims at providing a quantification method of the cartridge, which allows the liquid to be quantified synchronously during it is transferred by flowing through at least one quantification chamber inside the cartridge, thereby simplifying the operation and improving the sensitivity and the accuracy of cartridge screening.

This achieved by a cartridge and a quantification method thereof according to the independent claims. The dependent claims pertain to corresponding further developments and improvements.

As will be seen more clearly from the detailed description following below, a cartridge is provided by the present disclosure. The cartridge includes a main cover, a container, a first pipette, and a rotary valve. The main cover has a first surface and a second surface opposite to each other, the first surface includes a first quantification chamber, a first fluid tunnel, a first gas tunnel, and a storage chamber extending on a plane, wherein a first end of the first quantification chamber is connected to the first fluid tunnel, a first end of the storage chamber is connected to the first gas tunnel, and a second end of the first quantification chamber is connected to a second end of the storage chamber. The container is disposed on the second surface of the main cover and is overlapped with the second end of the first quantification chamber in a vertical direction. The first pipette is disposed on the main cover and partially protruded from the second surface of the main cover, wherein the first pipette is connected to the second end of the first quantification chamber and is vertically extended into the at least one container. The rotary valve is rotatably disposed on the second surface of the main cover.

As will be seen more clearly from the detailed description following below, a quantification method of a cartridge is provided by the present disclosure. The quantification method includes the following steps. A cartridge is firstly provided, and the cartridge includes a main cover, a plurality of containers, a first pipette, and a rotary valve. The main cover includes a first quantification chamber, a first fluid tunnel, a first gas tunnel, and a storage chamber extending on a plane, wherein a first end of the first quantification chamber is connected to the first fluid tunnel, a first end of the storage chamber is connected to the first gas tunnel, and a second end of the first quantification chamber is connected to a second end of the storage chamber. The first pipette is disposed on the main cover, wherein the first pipette is connected to the second end of the first quantification chamber. The plurality of containers is disposed on the main cover, wherein one of the plurality of containers overlaps the second end of the first quantification chamber in the vertical direction. The rotary valve is rotatably disposed on the main cover. Next, a reagent is injected into the first quantification chamber from the first end of the first quantification chamber. After the reagent is injected into the first quantification chamber, a part of the reagent is transferred to the storage chamber from the second end of the first quantification chamber. Then, a remained part of the reagent in the first quantification chamber is transferred to the one of the plurality of containers through rotating the rotary valve.

### Brief Description of the Drawings

In the following, the invention is further illustrated by way of example, taking reference to the accompanying drawings.
FIG. 1 to FIG. 4 are schematic diagrams illustrating a cartridge according to a first embodiment in the present disclosure, wherein:
   FIG. 1 shows an exploded view of a cartridge according to the first embodiment in the present disclosure;
FIG. 2 shows a lateral view of a cartridge according to the first embodiment in the present disclosure;
FIG. 3 shows a cross-sectional view of a cartridge according to the first embodiment in the present disclosure; and
FIG. 4 shows a cross-sectional view of a second quantification chamber according to the first embodiment in the present disclosure.
FIG. 5 to FIG. 6 are schematic diagrams illustrating a cartridge according to a second embodiment in the present disclosure, wherein:

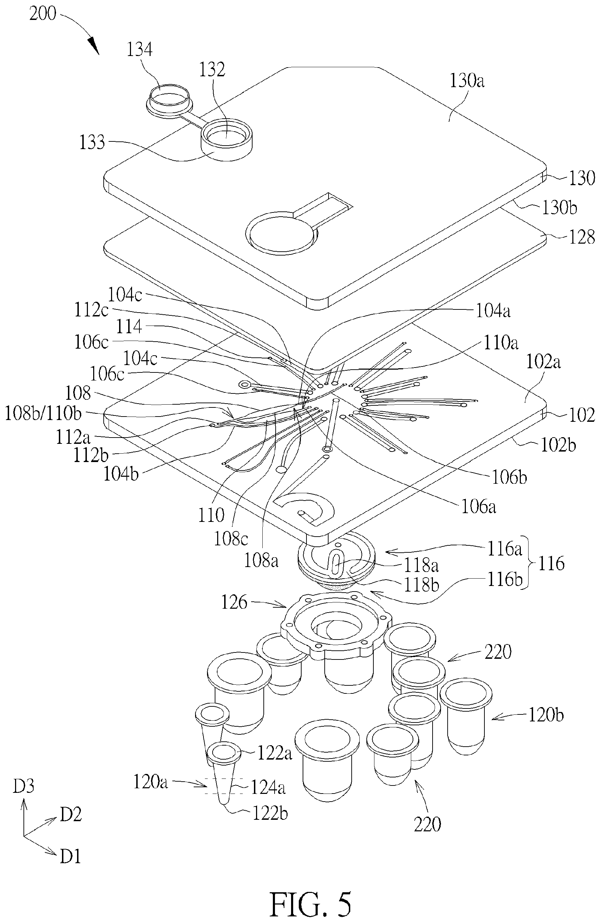

   FIG. 5 shows an exploded view of a cartridge according to the second embodiment in the present disclosure; and

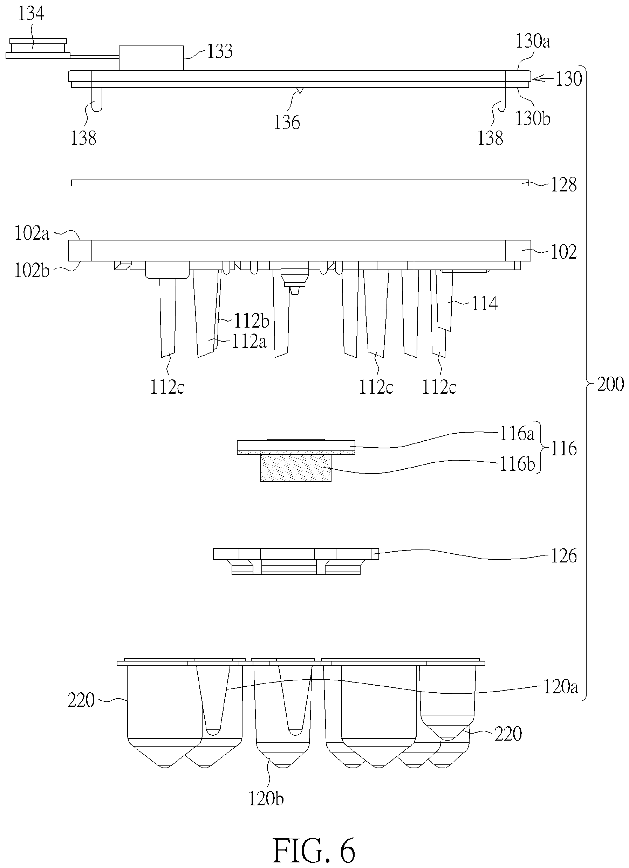

FIG. 6 shows a lateral view of a cartridge according to the second embodiment in the present disclosure.

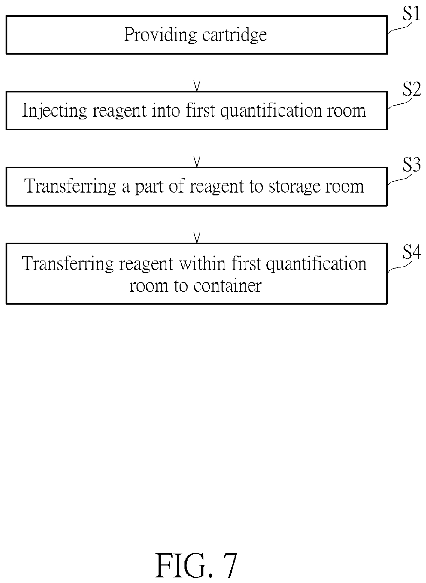

FIG. 7 is a schematic diagram illustrating a process flow of a quantification method according to a preferably embodiment in the present disclosure.

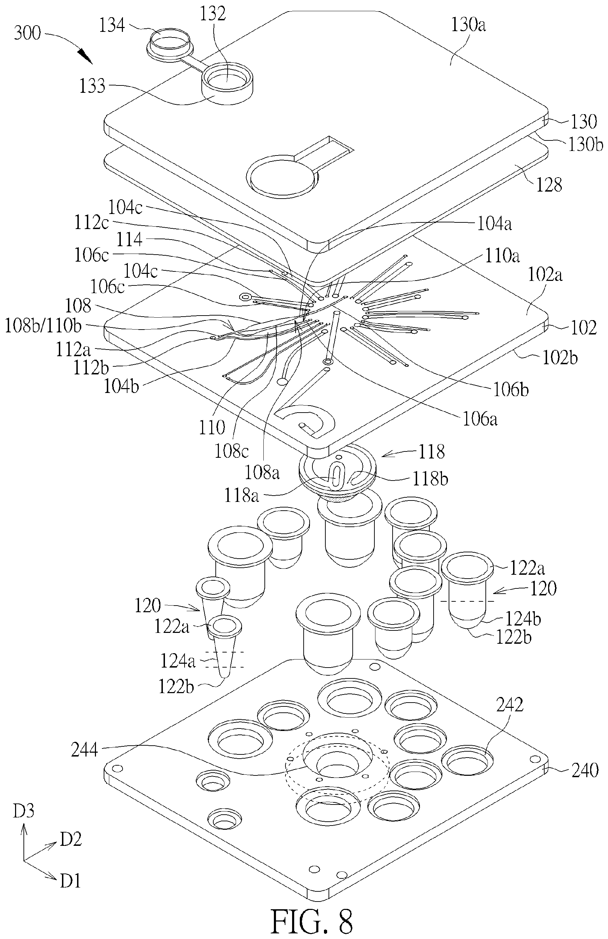

FIG. 8 is a schematic diagram illustrating a cartridge according to a third embodiment in the present disclosure.

### Detailed Description

To provide a better understanding of the presented disclosure, preferred embodiments will be described in detail. The preferred embodiments of the present disclosure are illustrated in the accompanying drawings with numbered elements.

In the present disclosure, the formation of a first feature over or on a second feature in the description may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed. Furthermore, spatially relative terms, such as "beneath," "below," "lower," "over," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. For example, if the device in the figures is turned over, elements described as "below" and/or "beneath" other elements or features would then be oriented "above" and/or "over" the other elements or features. The apparatus may be otherwise oriented (rotated 90 degrees or at other orientations) and the spatially relative descriptors used herein may likewise be interpreted accordingly.

It is understood that, although the terms first, second, third, etc. may be used herein to describe various elements, components, regions, layers and/or sections, these elements, components, regions, layers and/or sections should not be limited by these terms. These terms may be only used to distinguish one element, component, region, layer and/or section from another region, layer and/or section. Terms such as "first," "second," and other numerical terms when used herein do not imply a sequence or order unless clearly indicated by the context. Thus, a first element, component, region, layer and/or section discussed below could be termed a second element, component, region, layer and/or section without departing from the teachings of the embodiments.

As disclosed herein, the term "about" or "substantial" generally means within 20%, preferably within 10%, and more preferably within 5%, 3%, 2%, 1%, or 0.5% of a given value or range. Unless otherwise expressly specified, all of the numerical ranges, amounts, values and percentages disclosed herein should be understood as modified in all instances by the term "about" or "substantial". Accordingly, unless indicated to the contrary, the numerical parameters set forth in the present disclosure and attached claims are approximations that can vary as desired.

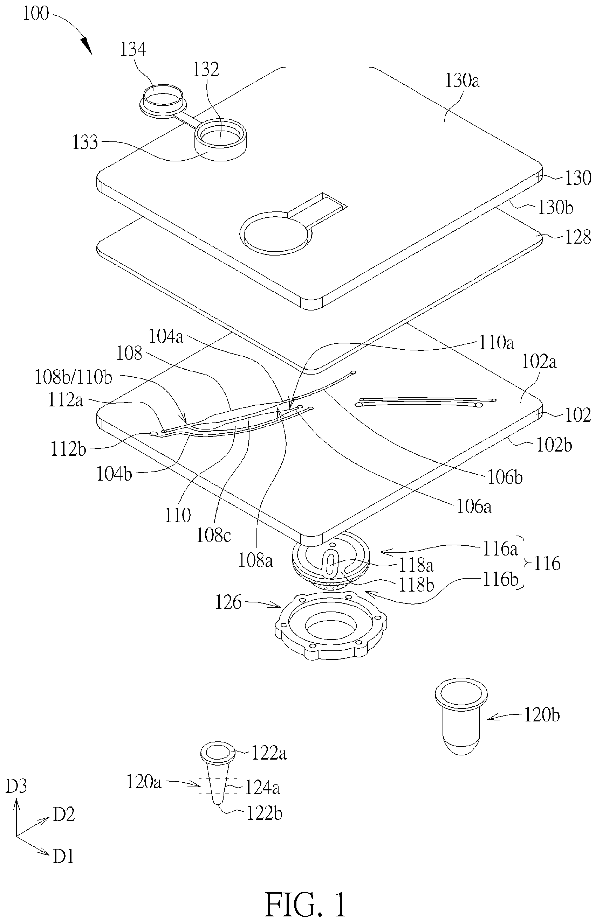

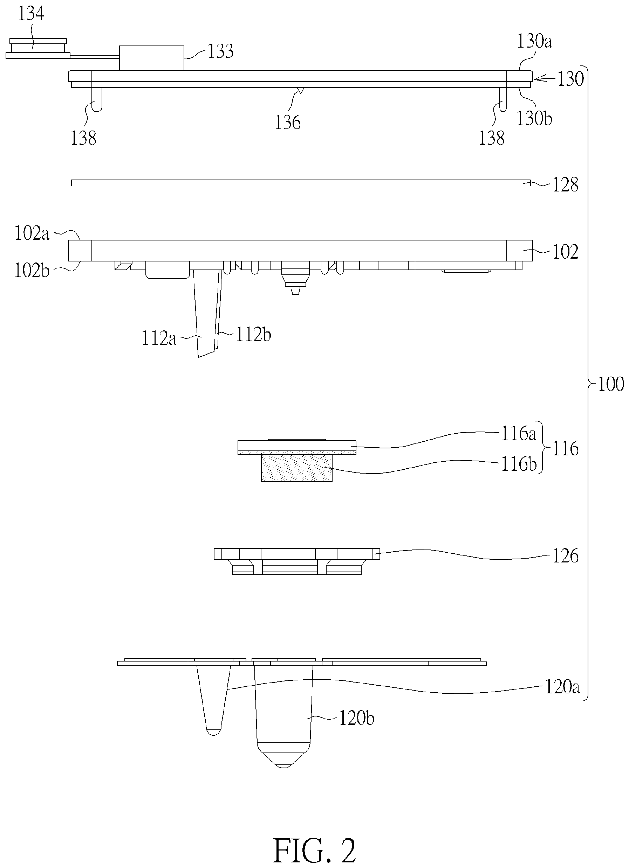

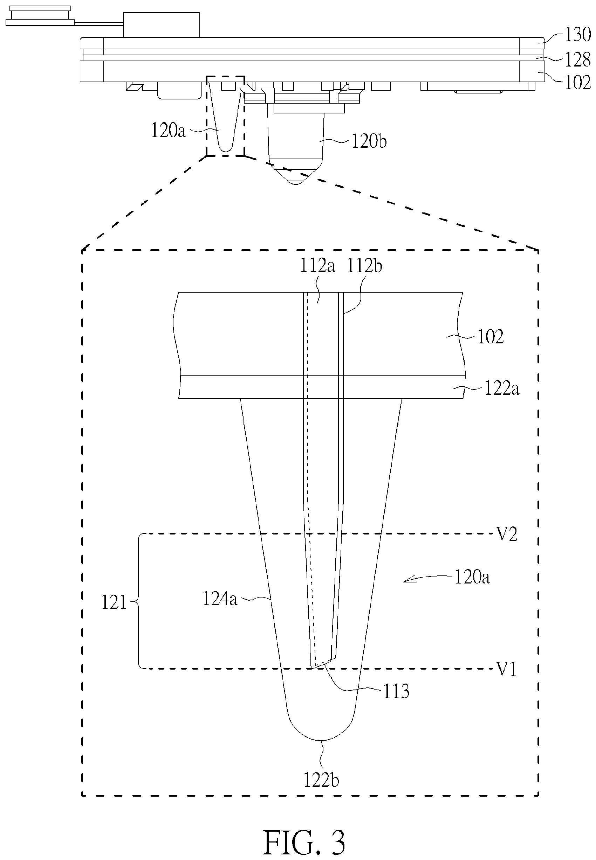

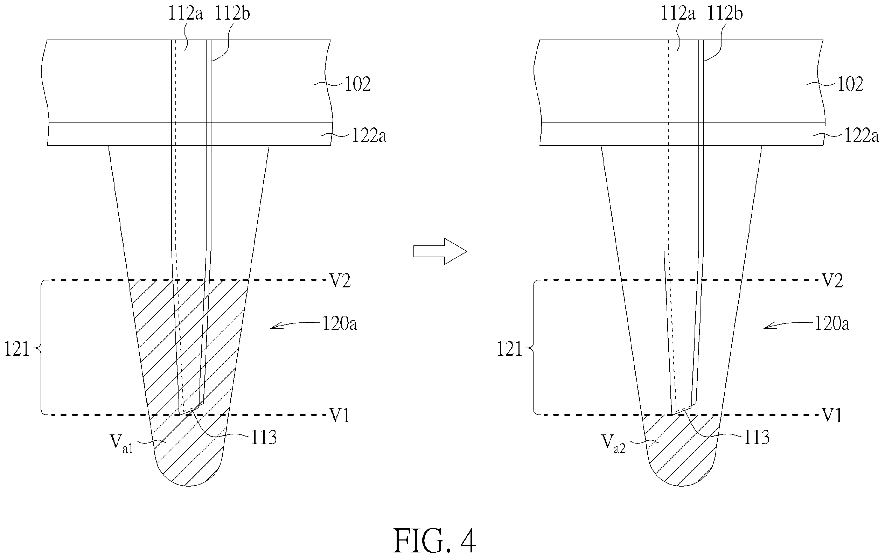

Please refers to FIG. 1 to FIG. 4, which illustrate a cartridge 100 according to the first embodiment of the present disclosure, wherein FIG. 1 is a schematic diagram of an exploded view of the cartridge 100, FIG. 2 is a schematic diagram of a lateral view of the cartridge 100, FIG. 3 is a schematic diagram of a cross-sectional view of the cartridge 100, and FIG. 4 is a schematic diagram of a cross-sectional view of a second quantification chamber 121. As shown in FIG. 1 to FIG. 3, the cartridge 100 includes a main cover 102, a container 120a, a first pipette 112a and a rotary valve. The main cover 102 includes a first surface 102a and a second surface 102b opposite to each other. The first surface 102a of the main cover 102 includes a first quantification chamber 108, a first fluid tunnel 104a, a first gas tunnel 106a, and a storage chamber 110 disposed thereon. The container 120a is disposed on the second surface 102b of the main cover 102. The first pipette 112a has a hollow structure (as shown in FIG. 2), which is extending downwardly from the first surface 102a to partially protrude from the second surface 102b, and to extend into the container 120a. The rotary valve 116 is rotatably disposed on the second surface 102b. It is noted that, a first end 108a of the first quantification chamber 108 is connected to the first fluid tunnel 104a, a first end 110a of the storage chamber 110 is connected to the first gas tunnel 106a, and a second end 108b of the first quantification chamber 108 is connected to a second end 110b of the storage chamber 110, with second ends 108b/110b of the first quantification chamber 108 and the storage chamber 110 both connecting to the first pipette 112a and overlapping the container 120a underneath in a vertical direction D3. Accordingly, through arranging the first quantification chamber 108, the cartridge 100 enables to achieve active quantification, during injecting the reagent into the container 120a, thereby improving the sensitivity and the accuracy of the cartridge 100 in screening.

Precisely speaking, the main cover 102 for example extended along a plane which is defined by both of a direction D1 and a direction D2, and which may be formed by a plastic injection molding method using an adequate material selected from the group including polypropylene (PP), polycarbonate (PC), polyimide (PI), polyethylene terephthalate (PET) and others having thermoplasticity and biocompatibility, but not limited thereto. The first fluid tunnel 104a and the first gas tunnel 106a are channels recessed downward from the first surface 102a, for the liquid circulation or the gas circulation. The first quantification chamber 108 and the storage chamber 110 are spaces recessed downward from the first surface 102a for liquid quantification or for containing the required reagents. People in the art should fully realize that the spaces of the first quantification chamber 108 and/or the storage chamber 110 may include any possible shape or volume, based on practical requirements, and which are not limited to what is shown in FIG. 1. In one embodiment, the first quantification chamber 108 preferably includes two opposite sidewalls 108c inclined on the plane (the plane being defined by the directions D1 and D2) as shown in FIG. 1, in order to prevent the reagent from being remained in the first quantification chamber 108 and affecting the quantitative results, while transferring the reagent. In another embodiment, a hydrophobic film (not shown in the drawings) may be additionally coated on the two sidewalls 108c of the first quantification chamber 108, to further avoid the reagent remained in the first quantification chamber 108, thereby promoting the transference of the reagent between each chamber and the container 120a.

As shown in FIG. 1 and FIG. 2, the rotary valve 116 is attached to the second surface 102b of the main cover 102 through a base 126 disposed underneath, and further includes a first portion 116a and a second portion 116b arranged from top to the bottom. The first portion 116a partially protrudes to define a flow channel 118a and an opening 118b, respectively, with the opening 118b being used for gas circulation, and with the flow channel 118a being used for liquid circulation. The flow channel 118a may include any suitable shape, such as a straight shape as shown in FIG. 1, but not limited thereto. In one embodiment, the first portion 116a and the second portion 116b for example include different materials, wherein the first portion 116a for example includes a material like thermoplastic polyurethanes (TPU), rubber, polyurethane material, polyethylene, polyethylene terephthalate (PET), thermoplastic polyester elastomer (TPEE), biocompatible resin, or a combination thereof, for closely attaching to the second surface 102b, and the second portion 116b for example includes a rigid material such as polypropylene fiber, polycarbonate, or the like, but not limited thereto. Through these arrangements, the second portion 116b of the rotary valve 116 may be externally connect to a motor (not shown in the drawings), with the motor driving and controlling the rotary valve 116 within the cartridge 100 to rotate in a specific direction and angle, and the opening 118b and the flow tunnel 118a of the first portion 116 are then aligned with the first gas tunnel 106a and the first fluid tunnel 104a respectively, thereby communicating the first fluid tunnel 104a, the first quantification chamber 108, the first pipette 112a and the container 120a. In this way, while a positive pressure or a negative pressure is provided by an external pump (not shown in the drawings), the cartridge 100 is allowable to deliver the reagent into the first quantification chamber 108 from the first fluid tunnel 104a for liquid quantification.

Further in view of FIG. 1, the main cover 102 further includes a second fluid tunnel 104b and a second gas tunnel 106b disposed on the first surface 102a, and a second pipette 112b. the second gas tunnel 106b is connected to the first fluid tunnel 104a, and the second fluid tunnel 104b is connected to the second pipette 112. The second pipette 112b includes a hollow structure extended downwardly from the first surface 102a, along the vertical direction D3, to partially protrude from the second surface 102b and to extend into the container 120a, as shown in FIG. 2 and FIG. 3. Accordingly, while the motor drives the rotary valve 116 within the cartridge 100 to rotate, the opening 118b on the rotary valve 116 is optionally aligned with the second gas tunnel 106b, so that, the quantitative reagent within the first quantification chamber may be next transferred to the container 120a via the first pipette 112a. Otherwise, the opening 118b of the rotary valve 116 is optionally aligned with the second fluid tunnel 104b, communicating the second fluid tunnel 104a, the second pipette 112b and the container 120a thereby. Then, while the positive pressure or the negative pressure is provided to the cartridge 100 by the external pump, the quantitative reagent within the container 120a may be further delivered to another container 120b also disposed on the second surface 102b, through the second pipette 112b and the second fluid tunnel 104b. However, in another embodiment, the first pipette 112 may also be omitted under a simplifying requirement on assemble, and only a through hole (not shown in the drawings) is connected to the second end 108b of the quantification chamber 108, with the through hole penetrating through the first surface 102a and the second surface 102b, to communicate the second ends 108b/110b of first quantification chamber 108 and the storage chamber 110 at the same time. Through these arrangements, the quantitative reagent may be directly delivered into the contain 120a via the through hole.

On the other hand, the containers 120a, 120b are respectively attached to the second surface 102b through a through hole disposed on the main cover 102. As shown in FIG. 3, the container 120a further includes a second quantification chamber 121 disposed inside, between a top portion 122a and a bottom portion 122b of the container 120a. the second quantification chamber 121 is a buffer region within the container 120a, wherein a bottom surface V1 of the second quantification chamber 121 and the bottom portions of the first pipette 112a and the second pipette 122b are preferably located at the same plane, and a top surface V2 of the second quantification chamber 121 is lower than top surfaces of the first pipette 112a and the second pipette 112b. In one embodiment, the container 120a further includes two opposite sidewalls 124a inclined from the vertical direction D3, to prevent the reagent from being remained in the second quantification chamber 121. Preferably, the inclined sidewalls 124a extend at least from the top surface V2 to the bottom surface V1 of the second quantification chamber 121, as shown in FIG. 3, to effectively prevent from liquid remain to affect the quantification results. Also, the bottom portions of the first pipette 112a and second pipette 112b preferably have inclined surfaces 113 respectively, so as to easily extend into the container 120a without directly contacting the bottom portion 122b of the container 120a, thereby facilitating the liquid absorption. People in the art should fully realize that, although the present embodiment is exemplified by only arranging two containers 120a, 120b in the cartridge 100, the number of the container within the cartridge 100 may be adjusted based on practical requirements, for example further including other containers (not shown in the drawings), with each of the containers optionally including the inclined sidewalls 124 and/or the second quantification chamber 121 disposed inside, for facilitating the process of the screening in the cartridge 100.

Further in view of FIG. 1 and FIG. 3, the cartridge 100 further includes a sealing layer 128 and a package cover 130, and which are sequentially attached to the first surface 102a of the main cover 102 for example through a suitable assembly process, such as a thermal melting process or an ultrasonic process, but not limited thereto. Precisely speaking, the sealing layer 128 is disposed on the first surface 102a of the main cover 102, to seal the first fluid tunnel 104a, the second fluid tunnel 104b, the first gas tunnel 106a, the first gas tunnel 106b, the first quantification chamber 108 and the storage chamber 110 disposed on the main cover 102. The package cover 130 is disposed on the sealing layer 128, and which is also extended along the plane defined by the directions D1 and D2. In one embodiment, the package cover 130 is also formed by a plastic injection molding method and includes a material selected from the group consisted of polypropylene, polycarbonate, polyimide, and polyethylene terephthalate, but is not limited thereto. The package cover 130 and the main cover 102 preferably include mutually corresponding contours, for example, both of them have a rectangular shape as shown in FIG. 1, but not limited thereto. People skilled in the art should easily understand that, the contour of the package cover 130 and the main cover 102 shown in FIG. 1 is only exemplary, and which may include other applicable shapes based on practical product requirements.

The package cover 130 includes a first surface 130a and a second surface 130b opposite to each other. The first surface 130a further includes a sealing member 132, an airtight ring 133, and a container cover 134. The sealing film 132 for example includes an aluminum foil to seal the opening of the container 120a. The airtight ring 133 is arranged on the sealing film 132 and overlaps the container 120a underneath, and which is then covered and closed by the container cover 134, to enhance the closure of the container 120a. However, in another embodiment, the sealing film 132 may also be omitted under the simplifying requirement on assemble, especially when the container 120a containing no sample or no reagent. The second surfaces 130b further includes at least one pin 136 and a plurality of assembly pillars 138 disposed thereon, wherein the pin 136 is protrusively arranged on the second surface 130b to penetrate through the sealing film 128 while attaching the package cover 130 to the main cover 102, for introducing air into the cartridge 100. The assembly pillars 138 are arranged around a periphery of the package cover 130, therefore guiding the package cover 130 to sit and to attach to the main cover 102 in an accuracy manner.

According to above arrangements, the cartridge 100 of the present embodiment enables to perform two-stepped liquid quantification during transferring the reagent, thereby improving the screening quality of the cartridge 100. Precisely speaking, a required reagent may be firstly introduced into the cartridge 100 from an external area (not shown in the drawings), or may be pre-loaded in a storage space (not shown in the drawings) or other suitable containers within the cartridge 100, followed by transferring the required reagent by rotating the rotary valve 116. While the required reagent is transferred, the opening 118b of the rotary valve 116 is selectively aligned with the first gas tunnel 106a, and the flow channel 118a is selectively aligned with the first fluid tunnel 104a at first, such that, the required reagent may therefore enters the first quantification chamber 108 through the first fluid tunnel 104a to accurately quantify the volume of the required reagent, with the quantitative reagent being remained in the first quantification chamber 108. It is noted that, through the opening 118b of the rotary valve 116, the first gas tunnel 106a and the storage chamber 110 together forming a gas circulation route, the required reagent may quickly and smoothly pass by the first fluid tunnel 104a and the first quantification chamber 108. After that, since the required reagent will firstly fill in the quantification chamber 108, followed by transferring the excessive amount of the required reagent into the storage chamber 100 via the second end 108b of the first quantification chamber 108 (namely, the second end 110b of the storage chamber 110). In this way, the first-stage quantification of the required reagent is therefore accomplished by arranging the first quantification chamber 108 and the storage chamber 110, to obtain a quantitative reagent. Then, the rotary valve 116 is rotated by controlling the external motor, so that the opening 118b of the rotary valve 116 is selectively aligned with the second gas tunnel 106b, with the quantitative reagent within the first quantification chamber 108 being driven by an air pressure and injected into the container 120a via the first pipette 112a disposed in the vertical direction D3. Meanwhile, since the storage chamber 110 is not connected to any fluid tunnel, the excessive amount of the required reagent is still remained in the storage chamber 100, without flowing into the container 120a. With these performances, any reagent can be actively quantified before being injected into the container 120a, by passing by the first quantification chamber 108, instead of only being quantified by controlling the external motor in a passive manner.

Next, while the opening 118b of the rotary valve 116 is selectively aligned with the second fluid tunnel 104b, the quantitative reagent within the container 120a may be further transferred to other spaces, such as other containers 120b inside the cartridge 100, through the second pipette 112b and the second fluid tunnel 104b. Please also refer to FIG. 4, while transferring the quantitative reagent, only the quantitative reagent within the second quantification chamber 121 is allowable to be delivered, with the quantitative reagent disposed lower than the bottom surface V1 of the second quantification chamber 121 (namely, lower than the bottom of the second pipette 112b) being remained in the container 120a. In other words, the transfer volume of the quantitative reagent is accurately controlled to a specific value (Va1-Va2) obtained by subtracting the volume va2 from the volume va1. In one embodiment, a freeze-dried sample may be previously placed in the container 120a, and the transfer volume of a mixed reagent after mixing the quantitative reagent and the freeze-dried sample may also be controlled to a value (Va1-Va2). In this way, the second-stage quantification is allowable to be synchronously and accurately carried out by the second quantification chamber 121, while transferring any reagent within the container 120a, so as to precisely control the transfer volume (Va1-Va2) of the reagent. Therefore, the cartridge 100 of the present embodiment is capable to achieve an active quantification during injecting any reagent into the container 120a, and also to achieve a further quantification while transferring the reagent from the container 120a to the container 120b, such that, which can be put in use on screenings with strict requirements on reaction volume, such as nucleic acid extraction reaction or nucleic acid amplification reaction, increasing the reaction efficiency and the sensitivity of the screening thereby.

People in the art should also fully understand that the cartridge of the present disclosure is not limited to the aforementioned type, and may include other examples or variations, in order to be effectively put in use on any possible screening. Please refer to FIG. 5 and FIG. 6, which illustrate a cartridge 200 according to the second embodiment of the present disclosure, wherein FIG. 5 is a schematic diagram of an exploded view of the cartridge 200, and FIG. 6 is a schematic diagram of a lateral view of the cartridge 200. The structure of the cartridge 200 in the present embodiment is substantially the same as that of the cartridge 100 in the aforementioned first embodiment, and all the similarities will not be redundantly described hereinafter. The differences between the present embodiment and the first embodiment is in that the cartridge 200 further includes a plurality of third fluid tunnels 104c and a plurality of third gas tunnels 106c disposed on the first surface 102a of the main cover 102, and a plurality of containers 120a, 120b, 220 2, a plurality of third pipettes 112c, and a plurality of gas inlets 114 disposed on the second surface 102b of the main cover 102, as shown in FIG. 5. Each of the third pipettes 112c and each of the gas inlets 114 include a hollow structure extending along the vertical direction D3 respectively, and which is extended downwardly from the first surface 102a to partially protrude from the second surface 102b, as shown in FIG. 6. It is noted that, each of the third pipette 112c and each of the gas inlets 114 together overlap a corresponding one of the containers 120b, 220 in the vertical direction D3, to extend into the corresponding one of the containers 120b, 220, and each of the third fluid tunnels 104c and each of the third gas tunnels 106c are horizontally extended from the center of the main cover 102 to the periphery, to respectively connect to a corresponding one of the third pipettes 112c and a corresponding one of the gas inlets 114. In this way, the flow channel 118a of the rotary valve 116 is selectively aligned with each of the third fluid tunnels 104c, communicating each of the third fluid tunnels 104c, the corresponding one of the third pipettes 112c and the corresponding one of the containers 120b, 220, and also, the opening 118b of the rotary valve 116 is selectively aligned with each of the third gas tunnels 106c at the same time for air circulation, such that, the required reagent or sample may be randomly transferred among each of the containers 120a, 120b, 220. With these arrangements, any necessary reagents, samples or freeze-dried biological materials may be optionally contained in each container 120a, 120b and 220 at first, according to the practical screening requirements, followed by being transferred to other containers through the third fluid tunnels 104c, the third pipettes 112c and the rotary valve 116. In other words, each of the containers 120a, 120b, 220 may be served as a sample container for containing any biological sample or biological material, an extraction container for containing a lysis solution or magnetic beads, a reaction container for containing a reaction reagent, and/or a cleaning container for containing a cleaning solution, buffer or the like, so that, the aforementioned reagents, samples or the freeze-dried biological materials may be randomly mixed or transferred for subsequent screening. People in the art should fully understand that the specific number, size, and the shape of the containers 120a, 120b, 220 are not limited to what is shown in FIG. 5, and which may be further adjusted according to the practical product requirements.

In order to make people skilled in the art of the present disclosure easily understand the cartridge of the present disclosure, a quantification method of the cartridge in the present disclosure will be further described below. Please refer to FIG. 7, which is a schematic diagram illustrating a process flow of the quantification method according to a preferably embodiment in the present disclosure. Firstly, a cartridge 200 is provided (step S1), the cartridge 200 includes a main cover 102, a plurality of containers 120a, 120b, 220, a first pipette 112a, and a rotary valve 116, and the main cover 102 further includes a first quantification chamber 108, a first fluid tunnel 104a, a first gas tunnel 106a, and a storage chamber 110 disposed thereon. The container 120a overlaps a second end 108b of the first quantification chamber 108 in the vertical direction D3. It is noted that, the detailed structure and the features of all of the aforementioned assembles are all described in the above paragraphs, and will not be redundantly described hereinafter.

Next, a reagent is injected into the first quantification chamber 108 (step S2). Precisely speaking, the reagent for example includes nucleic acid of a biological sample, and which is then transferred to the first quantification chamber 108 via the first fluid tunnel 104a for primary quantification, by rotating the rotary valve 116 until the flow channel 118a of the rotary valve 116 being aligned with the first fluid tunnel 104a, and the opening 118b of the rotary valve 116 being aligned with the first gas tunnel 106a. In one embodiment, the containers 120a , 120b, 220 respectively contain a biological sample, a lysate, magnetic beads, an eluent, a cleaning solution, or the like, and the reagent (including nucleic acid) is then delivered into the cartridge 200 for example through the following steps but not limited thereto. Firstly, the biological sample is transferred from one of the containers 220 containing the biological sample to another one of the container 220 containing the extraction solution, to rupture or to open cells within the biological sample, and to release substances such as the nucleic acid thereof. Next, the nucleic acid is transferred to one of the containers 220 containing magnetic beads, with the magnetic beads capturing the nucleic acid, followed by transferring the magnetic beads and the nucleic acid to another one of the containers 220 containing a cleaning solution, washing the magnetic beads and the nucleic acid. After that, the magnetic beads and the nucleic acid is further transferred to one of the containers 220 containing an eluent, isolating the nucleic acid from the magnetic beads, and the isolated nucleic acid is next transferred to another one of the containers 220, thereby obtaining the requirement reagent. However, in another embodiment, the reagent (including the nucleic acid) may also be directly disposed in one of the containers 220, followed by transferring the reagent from the one of the containers 220 to the first quantification chamber 108 for quantification, by rotating the rotary valve to a specific position, so as to simplified the configuration, as well as the operation steps of the cartridge 200.

Then, a portion of the reagent (including the nucleic acid) is transferred to the storage chamber 110 (step S3). Precisely speaking, while the reagent is injected into the first quantification chamber 108, an excessive portion of the reagent beyond the accommodating volume of the first quantification chamber 108 will flow into the storage chamber 110 adjacent to the first quantification chamber 108 from the second end 108b of the first quantification chamber 108, due to the pressure difference between the first quantification chamber 108 and the storage chamber 110. The excessive portion of the reagent is temperately stored in the storage chamber 110, and the reagent remained in the first quantification chamber 108 has been quantified synchronously, to obtain a quantified reagent with a volume equal to the accommodating volume of the first quantification chamber 108. Accordingly, through the arrangement of the first quantification chamber 108 and the storage chamber 110, the cartridge 200 is capable of accurately controlling the volume of the reagent in screening.

Following these, the reagent within the first quantification chamber 108 is transferred to the container 120a (step S4). In other words, the rotary valve 116 is rotated again until the opening 118 of the rotary valve 116 being aligned with the second gas tunnel 106b, for generating air pressure, so that, the quantified reagent within the first quantification chamber 108 may be pressed into the container 120a by the air pressure, and the excessive portion of the reagent is still remained in the storage chamber 110. In this way, the reagent (including nucleic acid) injected into the container 120a may therefore obtain an accurately controlled volume. It is noted that, in one embodiment, the container 120a may further includes a freeze-dried sample disposed therein, so that, the reagent injected into the container 120a may be mixed with the freeze-dried sample, to form a mixture of the nucleic acid and the freeze-dried sample to carry out the subsequent screening. Accordingly, since the reagent is quantified through the first quantification chamber 108, the mixing ratio between the reagent and the freeze-dried sample may also be accurately controlled, thereby improving the sensitivity and the accuracy of the subsequent screening.

After that, a requested reaction such as a nucleic acid amplification may be performed through the mixture of the nucleic acid and the freeze-dried sample within the container 120a, under a precisely controlled temperature condition, but not limited to. However, in another embodiment, the rotary valve 116 may be rotated again until the flow channel 118 of the rotary valve 116 being aligned with the second fluid tunnel 104b, to transfer the mixture of the nucleic acid and the freeze-dried sample from the container 120a to another container 120b to carry out the request reaction. Also, while transferring the mixture of the nucleic acid and the freeze-dried sample, the mixture of the nucleic acid and the freeze-dried sample may be further quantified through the second quantification chamber 121 at the same time, followed by delivering into the container 120b by passing by the second pipette 112b and the second fluid tunnel 104b, so as to control the volume of the reagent in a further precisely manner, and to increase the reaction efficiency. In other words, according to the quantification method of the present disclosure, two-stages of active quantification process are respectively performed through the first quantification chamber 108 and/or the second quantification chamber 121 disposed within the cartridge 200, so that the reagent will be simultaneously quantified during injecting the reagent into the container 120a or sucking out the reagent from the container 120a. In this way, the quantification method of the present embodiment may gain an improved screening quantify of the cartridge 200, under a simplified operation. It is noted that, although the quantification method of the present embodiment is exemplified by using the cartridge 200 in the aforementioned embodiment to carry out the screening, the present disclosure is not limited thereto. In another embodiment, the quantification method may also be carried out by using the cartridge 100 under the practical requirements.

People in the art should also fully understand that the cartridge of the present disclosure may include other examples or variations. The following description will detail the different embodiments of the cartridge, and the following description will detail the dissimilarities among the different embodiments and the identical features will not be redundantly described. In order to compare the differences between the embodiments easily, the identical components in each of the following embodiments are marked with identical symbols.

Please refer to FIG. 8 which illustrate a cartridge 300 according to the third embodiment of the present disclosure. The structure of the cartridge 300 in the present embodiment is substantially the same as that of the cartridge 200 in the aforementioned second embodiment, and all the similarities will not be redundantly described hereinafter. The differences between the present embodiment and the second embodiment are in that the cartridge 300 further includes a bottom cover 240 for carrying the containers120a, 120b, 220 and the rotary valve 116.

Precisely speaking, as shown in FIG. 8, the bottom cover 240 is disposed under the main cover 102, and which may be attached to the second surface 102b of the main cover 102 for example through a suitable assembly process, such as a thermal melting process or an ultrasonic process, but not limited thereto. the bottom cover 240 further includes a plurality of through holes 242, 244 respectively penetrating through two opposite surfaces of the bottom cover 240. Each of the through holes 242, 244 may include any possible size for accommodating each of the container 120a, 120b, 220 and the rotary valve 116. With these arrangements, the container 120a, 120b, 220 and the rotary valve 116 are sandwiched between the main cover 102 and the bottom cover 240, thereby enhancing the structural reliability and the tightness of the cartridge 300.

Overall speaking, the cartridge of the present disclosure further includes at least one quantification chamber disposed therein, to achieve the active quantification of the reagent during transferring the reagent, thereby simplifying the operation and the assemble of the cartridge, and further improving the sensitivity and the accuracy of cartridge screening.

## Claims

1. A cartridge (100, 200, 300), **characterized by** comprising;
a main cover (102), having a first surface (102a) and a second surface (102b) opposite to each other, the first surface (102a) comprising a first quantification chamber (108), a first fluid tunnel (104a), a first gas tunnel (106a), and a storage chamber (110) extending on a plane, wherein a first end (108a) of the first quantification chamber (108) is connected to the first fluid tunnel (104a), a first end (110a) of the storage chamber (110) is connected to the first gas tunnel (106a), and a second end (108b) of the first quantification chamber (108) is connected to a second end (110b) of the storage chamber (110);
at least one container (120a), disposed on the second surface (102b) of the main cover (102), the at least one container (120a) being overlapped with the second end (108b) of the first quantification chamber (108) in a vertical direction (D3);
a first pipette (112a), disposed on the main cover (102) and partially protruded from the second surface (102a) of the main cover (102), wherein the first pipette (112a) is connected to the second end (108b) of the first quantification chamber (108) and is vertically extended into the at least one container (120a); and
a rotary valve (116), rotatably disposed on the second surface (102a) of the main cover (102).

2. The cartridge (100, 200, 300) according to claim 1, **characterized by** further comprising:
a second quantification chamber (121), disposed in the at least one container (120a), between a top portion (122a) and a bottom portion (122b) of the at least one container (120a), wherein a bottom surface (V1) of the second quantification chamber (121) and a bottom portion of the first pipette (112a) is coplanar.

3. The cartridge (100, 200, 300) according to claims 1 or 2, **characterized in that** the rotary valve (116) further comprises a first portion (116a) and a second portion (116b) having different materials, and a flow channel (118a) and an opening (118b) are disposed on the first portion (116a).

4. The cartridge (100, 200, 300) according to claim 3, **characterized in that** the flow channel (118a) and the opening (118b) are respectively aligned with the first fluid tunnel (104a) and the first gas tunnel (104b).

5. The cartridge (200, 300) according to claims 3 or 4, **characterized by** further comprising:
a second gas tunnel (106b), disposed on the first surface (102a) of the main cover (102) and connected to the first fluid tunnel (104a), wherein the opening (118a) of the rotary valve (116) is optionally aligned with the second gas tunnel (106b); and
a second fluid tunnel (104b), disposed on the first surface (102a) of the main cover (102), one end of the second fluid tunnel (104b) being overlapped with the at least one container (120a) in the vertical direction (D3), wherein the flow channel (118a) of the rotary valve (116) is align with the second fluid tunnel (104b).

6. The cartridge (200, 300) according to claim 5, **characterized by** further comprising:
a second pipette (112b), disposed on the main cover (102) and protruded from the second surface (102b) of the main cover (102), wherein the second pipette (112b) is connected to the second fluid tunnel (104b) and is vertically extended into the at least one container (120a).

7. The cartridge (100, 200, 300) according to one of claims 1 to 6, **characterized by** further comprising:
a sealing layer (128), covering on the first surface (102a) of the main cover (102); and
a package cover (130), disposed on the sealing layer (128), wherein the package cover (130) further comprises:
an airtight ring (133), disposed on a first surface (130a) of the package cover (130), and overlapped with the at least one container (120a) in the vertical direction (D3);
a container cover (134), disposed on the airtight ring (133) to seal the at least one container (120a); and
at least one pin (136), protrusively disposed on a second surface of the package cover.

8. The cartridge (200, 300) according to one of claims 1 to 7, **characterized by** further comprising:
a plurality of third fluid tunnels (104b) and a plurality of third gas tunnels (106c), respectively disposed on the first surface (102a) of the main cover (102) to extend along different directions;
a plurality of third pipette (112c) and a plurality of gas inlets (114), disposed on the main cover (102) to respectively protrude from the second surface (102b) of the main cover (102), wherein each of the third pipette (112c) is connected to each of the third fluid tunnels (104c), and each of the gas inlets (114) is connected to each of the third gas tunnels (106c); and
a plurality of the containers (120a), respectively disposed on the second surface (102b) of the main cover (102), wherein each of the gas inlets (114) and each of the pipette (112c) are respectively extended into each of the containers (120a).

9. A quantification method, **characterized by** comprising;
providing a cartridge (100, 200, 300), the cartridge comprising:
a main cover (102) comprising a first quantification chamber (108), a first fluid tunnel (104a), a first gas tunnel (106a), and a storage chamber (110) extending on a plane, wherein a first end (108a) of the first quantification chamber (108) is connected to the first fluid tunnel (104a), a first end (110a) of the storage chamber (110) is connected to the first gas tunnel (106a), and a second end (108b) of the first quantification chamber (108) is connected to a second end (110b) of the storage chamber (110);
a first pipette (112a), disposed on the main cover (102), wherein the first pipette (112a) is connected to the second end (108b) of the first quantification chamber (108);
a plurality of containers (120a) disposed on the main cover (102), wherein one of the plurality of containers (120a) overlaps the second end (108b) of the first quantification chamber (108) in a vertical direction (D3); and
a rotary valve (116), rotatably disposed on the main cover (102), wherein a flow channel (118a) and an opening (118b) is disposed on a surface of the rotary valve (116);
injecting a reagent into the first quantification chamber (108) from the first end (108a) of the first quantification chamber (108);
after the reagent is injected into the first quantification chamber (108), transferring a part of the reagent to the storage chamber (110) from the second end (108b) of the first quantification chamber (108); and
transferring another part of the reagent from the first quantification chamber (108) to the one of the plurality of container (120a) through the rotary valve (116).

10. The quantification method according to claim 9, **characterized by** further comprising:
rotating the rotary valve (116) until the flow channel (118a) of the rotary valve (116) being aligned with the first fluid tunnel (104a) and the opening (118b) of the rotary valve (116) being aligned with the first gas tunnel (106a).

11. The quantification method according to claims 9 or 10, **characterized by** further comprising:
a second gas tunnel (106b), disposed on the main cover (102) and connected to the first fluid tunnel (104a);
a second fluid tunnel (104b), disposed on the main cover (102);
a second pipette (112b), disposed on the main cover (102) and connected to the second fluid tunnel (104b), wherein the second pipette (112b) is vertically extended into one of the plurality of containers (120a); and
a second quantification chamber (121), disposed in one of the plurality of containers (120a), between a top portion (122a) and a bottom portion (122b) of the one of the plurality of containers (120a).

12. The quantification method according to claims 10 or 11, **characterized by** further comprising:
rotating the rotary valve (116) until the opening (118b) of the rotary valve (116) being aligned with the second gas tunnel (106b), while transferring the another part of the reagent from the first quantification chamber (108) to the one of the plurality of container (120a).

13. The quantification method according to one of claims 9 to 12, **characterized by** further comprising:
mixing the reagent and a biological sample disposed within one of the plurality of the containers (120a), to form a quantified mixture through the second quantification chamber (121) and the second pipette (112b); and
transferring the mixture from the second fluid tunnel (104b) to another one of the plurality of containers (120b).

14. The quantification method according to claim 13, **characterized by** further comprising:
rotating the rotary valve (116) until the flow channel (118b) of the rotary valve (116) being aligned with the second fluid tunnel (104b).

15. The quantification method according to claim 11, **characterized in that** a bottom surface (V1) of the second quantification chamber (121) and a bottom portion of the first pipette (112a) is coplanar, and a top surface (V2) of the second quantification chamber (121) is lower than the top portion (122a) of the plurality of containers (120a).
